(19) Europäisches Patentamt

European Patent Office

Office européen des brevets

(11) **EP 4 250 390 A1**

(12) **EUROPEAN PATENT APPLICATION**

(43) Date of publication:
**27.09.2023 Bulletin 2023/39**

(21) Application number: **23161992.5**

(22) Date of filing: **15.03.2023**

(51) International Patent Classification (IPC):
*H01M 4/13* (2010.01)        *H01M 4/36* (2006.01)
*H01M 4/62* (2006.01)        *H01M 10/0525* (2010.01)
*H01M 10/0567* (2010.01)     *H01M 10/0569* (2010.01)
*H01M 4/02* (2006.01)

(52) Cooperative Patent Classification (CPC):
**H01M 4/13; H01M 4/36; H01M 4/62;**
**H01M 10/0525; H01M 10/0567; H01M 10/0569;**
H01M 2004/027; H01M 2300/0034;
H01M 2300/0037; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2022  CN 202210281888**

(71) Applicant: **Ningde Amperex Technology Ltd.
Ningde City, Fujian 352100 (CN)**

(72) Inventors:
• **ZHANG, Lilan
  Ningde City, Fujian Province, People s Republic
  of
  China, 352100 (CN)**
• **TANG, Chao
  Ningde City, Fujian Province, People s Republic
  of
  China, 352100 (CN)**

(74) Representative: **Icosa
83 avenue Denfert-Rochereau
75014 Paris (FR)**

(54) **ELECTROCHEMICAL APPARATUS AND ELECTRONIC APPARATUS**

(57)     This application provides an electrochemical apparatus including a negative electrode plate and an electrolyte. The negative electrode plate includes a negative electrode current collector and a negative electrode active material layer disposed on the negative electrode current collector. The negative electrode active material layer includes a negative electrode active material. The negative electrode active material contains a silicon-based active material, and a mass percentage of the silicon-based active material based on a mass of the negative electrode active material is X%. The electrolyte contains metal ions. Based on a mass of the electrolyte, a mass proportion of the metal ions is A ppm, and $0 < X/A \leq 8$. During charging of the electrochemical apparatus, the metal ions may have a reduction reaction at a negative electrode, and form a stable Si-metal binary alloy phase or Si-O-metal ternary alloy phase with element silicon in the silicon-based active material, to effectively inhibit swelling of the silicon-based active material during the process of lithium intercalation, reduce consumption of the electrolyte, and effectively improve cycling performance of the electrochemical apparatus.

EP 4 250 390 A1

**Description**

**TECHNICAL FIELD**

This application relates to the electrochemical field, and in particular, to an electrochemical apparatus and an electronic apparatus.

**BACKGROUND**

With advantages such as high energy storage density, long cycle life, and high safety, lithium-ion batteries are widely used in various fields such as portable electric energy storage, electronic devices, and electric vehicles. As the technological society develops rapidly, various industries impose higher requirements on comprehensive performance of lithium-ion batteries, such as higher energy density and better cycling performance.

A silicon-based material has a large gram capacity, and when used as a negative electrode active material for lithium-ion batteries, can significantly improve energy density of the lithium-ion batteries. However, in a deintercalation process of lithium ions, the silicon-based material experiences serious volume swelling, causing problems such as battery thickness increase during cycling, electrode interface instability due to damage to a negative electrode SEI film, and electrolyte consumption due to regeneration of the SEI film. All these problems shorten cycle life of lithium ion batteries.

**SUMMARY**

In view of the problems in the background, an objective of this application is to provide an electrochemical apparatus and an electronic apparatus.

To achieve the foregoing objective, this application provides an electrochemical apparatus including a negative electrode plate and an electrolyte. The negative electrode plate includes a negative electrode current collector and a negative electrode active material layer disposed on the negative electrode current collector. The negative electrode active material layer includes a negative electrode active material. The negative electrode active material contains a silicon-based active material, and a mass percentage of the silicon-based active material based on a mass of the negative electrode active material is X%. The electrolyte contains metal ions. Based on a mass of the electrolyte, a mass proportion of the metal ions is A ppm, and $0 < X/A \leq 8$. In some embodiments, $0.001 \leq X/A \leq 4$.

In some embodiments, the metal ions include at least one of magnesium ions, aluminum ions, zinc ions, calcium ions, titanium ions, cesium ions, or molybdenum ions.

In some embodiments, based on the mass of the electrolyte, the mass proportion of the metal ions is A ppm, where $10 \leq A \leq 8000$.

In some embodiments, the electrolyte may further contain at least one of anions $NO_3^{2-}$, $SO_4^{2-}$, $SO_3^{2-}$, $CO_3^{2-}$, or $SiO_3^{2-}$.

In some embodiments, based on the mass of the electrolyte, a mass proportion of the anions is B ppm, where $5 \leq B \leq 10000$.

In some embodiments, the electrolyte may further contain an additive, and the additive includes at least one of fluoroethylene carbonate, vinylene carbonate, 1,3-propanesultone, succinonitrile, adiponitrile, or 1,3,6-hexanetricarbonitrile.

In some embodiments, based on the mass of the electrolyte, a mass percentage of the additive is C%, where $0.5 \leq C \leq 40$.

In some embodiments, the negative electrode active material contains silicon-based active particles, and a square region with an area of 200 $\mu m^2$ is selected from a cross section of the negative electrode active material layer, where the number of the silicon-based active particles accommodated in the square region is N, $1 \leq N \leq 50$, and the cross section of the negative electrode active material layer is parallel to a thickness direction of the negative electrode active material layer.

In some embodiments, a compacted density of the negative electrode plate is M g/cm$^3$, where $1 \leq M \leq 2.5$.

In some embodiments, the electrochemical apparatus in this application satisfies at least one of the following conditions:

> (1) based on the mass of the electrolyte, a mass percentage of the fluoroethylene carbonate is 5% to 30%;
> (2) based on the mass of the electrolyte, a mass percentage of the vinylene carbonate is 0.5% to 3%;
> (3) based on the mass of the electrolyte, a mass percentage of the 1,3-propanesultone is 0.5% to 3%;
> (4) based on the mass of the electrolyte, a mass percentage of the succinonitrile is 0.5% to 3%;
> (5) based on the mass of the electrolyte, a mass percentage of the adiponitrile is 0.5% to 3%; and

(6) based on the mass of the electrolyte, a mass percentage of the 1,3,6-hexanetricarbonitrile is 0.5% to 3%.

In some embodiments, this application further provides an electronic apparatus, where the electronic apparatus includes the foregoing electrochemical apparatus.

This application includes at least the following beneficial effects:
In the electrochemical apparatus of this application, the metal ions added may have a reduction reaction at the negative electrode during charging, and form a stable Si-metal binary alloy phase or Si-O-metal ternary alloy phase with element silicon in the silicon-based active material, to effectively inhibit swelling of the silicon-based active material during the process of lithium intercalation, reduce fracture of the SEI film on the negative electrode interface and consumption of the electrolyte, and effectively improve cycling performance of the electrochemical apparatus.

## DETAILED DESCRIPTION

It should be understood that the disclosed embodiments are merely examples of this application. This application may be implemented in various forms. Therefore, specific details disclosed in this specification should not be construed as a limitation, but are used merely as a basis for the claims and serve as an illustrative basis to instruct persons skilled in the art to implement this application in various manners.

[Electrochemical apparatus]

The electrochemical apparatus in this application is not particularly limited, and may include any apparatus in which an electrochemical reaction occurs. In some embodiments, the electrochemical apparatus may include but is not limited to a lithium-ion battery.

The electrochemical apparatus includes a positive electrode plate, a negative electrode plate, a separator, and an electrolyte.

[Negative electrode plate]

The negative electrode plate includes a negative electrode current collector and a negative electrode active material layer disposed on the negative electrode current collector.

In some embodiments, the negative electrode active material layer includes a negative electrode active material. In some embodiments, the negative electrode active material contains a silicon-based active material, and a mass percentage of the silicon-based active material based on a mass of the negative electrode active material is X%. In some embodiments, the electrolyte contains metal ions, where based on a mass of the electrolyte, a mass proportion of the metal ions is A ppm, and $0 < X/A \leq 8$. In some embodiments, $0.001 \leq X/A \leq 4$. During charging of the electrochemical apparatus, the metal ions may have a reduction reaction at the negative electrode, and form a stable Si-metal binary alloy phase or Si-O-metal ternary alloy phase with element silicon in the silicon-based active material, to effectively inhibit swelling of the silicon-based active material caused by intercalation of active ions (for example, lithium ions), reduce fracture of the SEI film on the negative electrode interface and consumption of the electrolyte, and effectively improve cycling performance of the electrochemical apparatus (for example, a lithium-ion battery).

In some embodiments, the negative electrode active material layer contains silicon-based active particles, and a cross section of the negative electrode active material layer includes a square region with an area of 200 $\mu m^2$, where the number of silicon-based active particles accommodated the square region is N, $1 \leq N \leq 50$, and the cross section of the negative electrode active material layer is parallel to a thickness direction of the negative electrode active material layer, that is, the cross section of the negative electrode active material layer is obtained by cutting the negative electrode active material layer along the thickness direction of the negative electrode active material layer. When $1 \leq N \leq 50$, the electrolyte better infiltrates the negative electrode, and active ions face smaller impedance in the negative electrode plate during intercalation and deintercalation, so that the electrochemical apparatus has higher cycling performance.

In some embodiments, a compacted density of the negative electrode plate is M $g/cm^3$, where $1 \leq M \leq 2.5$. In a case that the compacted density of the negative electrode plate is excessively low, connection between active material particles is affected, and swelling of the negative electrode after intercalation of active ions (for example, lithium ions) is likely to cause falling-off and inactivation of active substances, leading to failure of electrical connection. In a case that the compacted density of the negative electrode plate is excessively high, some active particles are likely to be crushed, and infiltration of the electrolyte into the negative electrode is reduced, causing adverse impact to cycling performance of the electrochemical apparatus.

In some embodiments, the negative electrode active material layer further includes a negative electrode binder. In some embodiments, the negative electrode binder includes at least one of difluoroethylene-hexafluoropropylene (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, and nylon.

In some embodiments, the negative electrode active material layer further includes a conductive agent. The conductive agent is not limited to a specific type, and may be selected according to a requirement. In an example, the conductive agent includes but is not limited to at least one of conductive graphite, superconducting carbon, acetylene black, carbon black, Ketjen black, carbon dot, carbon nanotube, graphene, and carbon nanofiber.

In some embodiments, the negative electrode active material layer further includes a thickener. The thickener is not limited to a specific type, and may be selected according to a requirement. In an example, the thickener includes but is not limited to sodium carboxymethyl cellulose (CMC).

The negative electrode current collector has two opposite surfaces in its thickness direction, and the negative electrode active material layer is disposed on either or both of the two opposite surfaces of the negative electrode current collector.

The negative electrode current collector may be a metal foil or a porous metal plate, for example, a foil or a porous plate made of metal such as copper, nickel, titanium, or iron, or an alloy thereof. In an example, the negative electrode current collector is a copper foil.

The negative electrode plate in this application may be prepared according to a conventional method in the art. Usually, the negative electrode active material and the optional conductive agent, binder, and thickener are dissolved in a solvent, to form a uniform negative electrode slurry, the negative electrode slurry is applied onto the negative electrode current collector, and processes such as drying and cold pressing are performed to obtain the negative electrode plate. The solvent may be N-methylpyrrolidone (NMP) or deionized water, but this application is not limited thereto.

The negative electrode plate in this application does not exclude additional functional layers other than a negative electrode film layer. For example, in some embodiments, the negative electrode plate in this application further includes a conductive primer layer (for example, including a conductive agent and a binder) that is sandwiched between the negative electrode current collector and the negative electrode film layer and that is disposed on a surface of the negative electrode current collector.

[Electrolyte]

In some embodiments, the electrolyte contains metal ions, and the metal ions include at least one of magnesium ions, aluminum ions, zinc ions, calcium ions, titanium ions, cesium ions, or molybdenum ions.

In some embodiments, the metal ions come from bistrifluorosulfonimide metal salt, trifluorosulfonimide metal salt, or another salt containing the metal ions that is known in the art, for example, magnesium sulfate, zinc sulfate, or aluminum sulfate.

In some embodiments, based on the mass of the electrolyte, the mass proportion of the metal ions is A ppm, where $10 \leq A \leq 8000$. In some embodiments, $100 \leq A \leq 5000$. When the mass proportion of the metal ions is excessively low, the binary or ternary alloy phase formed through interaction between the metal ions and element silicon at the negative electrode cannot effectively inhibit swelling of the silicon-based active material. When the mass proportion of the metal ions is excessively high, excessive metal elements are deposited at the negative electrode, which may lead to a side reaction with the electrolyte and cause adverse impact to cycling performance of the electrochemical apparatus.

In some embodiments, the electrolyte may further contain at least one of anions $NO_3^{2-}$, $SO_4^{2-}$, $SO_3^{2-}$, $CO_3^{2-}$, or $SiO_3^{2-}$. In some embodiments, based on the mass of the electrolyte, a mass proportion of the anions is B ppm, where $5 \leq B \leq 10000$. In some embodiments, $100 \leq B \leq 10000$. With the anions added to the electrolyte, cycling performance of the electrochemical apparatus can be further improved. This is because the anion group participates in formation of a low-impedance SEI film on the negative electrode interface, which facilitates faster migration of lithium ions, thereby effectively improving cycling performance of the electrochemical apparatus. In some embodiments, the anions come from a lithium salt compound such as lithium sulfate, lithium nitrate, lithium sulfite, lithium silicate, lithium carbonate, or another substance containing the anions that is known in the art.

In some embodiments, the electrolyte may further contain an additive. In some embodiments, the additive includes at least one of fluoroethylene carbonate, vinylene carbonate, 1,3-propanesultone, succinonitrile, adiponitrile, or 1,3,6-hexanetricarbonitrile. In some embodiments, based on the mass of the electrolyte, a mass percentage of the additive is C%, where $0.5 \leq C \leq 40$. The additive can serve as a protection agent for positive-electrode and negative electrode interfaces to stabilize the electrode structure and reduce side reactions between the positive-electrode and negative electrode active substances and the electrolyte, thereby further improving cycling stability of the electrochemical apparatus.

In some embodiments, a mass percentage of the fluoroethylene carbonate is 5% to 30%.

In some embodiments, a mass percentage of the vinylene carbonate is 0.5% to 3%.

In some embodiments, a mass percentage of the 1,3-propanesultone is 0.5% to 3%.

In some embodiments, a mass percentage of the succinonitrile is 0.5% to 3%.

In some embodiments, a mass percentage of the adiponitrile is 0.5% to 3%.

In some embodiments, a mass percentage of the 1,3,6-hexanetricarbonitrile is 0.5% to 3%.

In some embodiments, the electrolyte further includes an organic solvent and a lithium salt, where types of the organic solvent and the lithium salt are not specifically limited and may be selected according to a requirement.

In some embodiments, for example, the lithium salt may include but is not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), and lithium dioxalate borate (LiBOB). One of the foregoing lithium salts may be used alone, or two, three, or more thereof may be used.

In some embodiments, the organic solvent may include at least one of a carbonate compound, a carboxylate compound, an ether compound, and a sulfone compound. In an example, the organic solvent includes but is not limited to at least one of propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetramethylene sulfone (SF), methyl sulfone (MSM), ethyl methyl sulfone (EMS), diethyl sulfone (ESE), 1,3-dioxolane (DOL), and dimethyl ether (DME). One of the foregoing organic solvents may be used alone, or two, three, or more thereof may be used. Optionally, two, three, or more of the foregoing organic solvents are used.

The electrolyte may be prepared according to a conventional method in the art. For example, the organic solvent, the lithium salt, and the optional additive may be mixed to obtain a uniform electrolyte. A sequence of adding the materials is not particularly limited. For example, the lithium salt and the optional additive may be added to the organic solvent to be mixed to obtain the uniform electrolyte.

In this application, the additive in the electrolyte and its proportion may be determined according to a conventional method in the art. For example, the additive in the electrolyte and its proportion may be detected using gas chromatography-mass spectrometry (GC-MS), ion chromatography (IC), liquid chromatography (LC), inductively coupled plasma optical emission spectrometry (ICP), or the like.

It should be noted that, in an electrolyte test of this application, a prepared fresh electrolyte may be directly used, or an electrolyte may be obtained from an electrochemical apparatus. An example method for obtaining an electrolyte from an electrochemical apparatus includes the following steps: discharging the electrochemical apparatus to a cut-off discharge voltage, performing centrifugation, and then taking an appropriate amount of liquid obtained through centrifugation, namely the electrolyte.

[Positive electrode plate]

The positive electrode plate includes a positive-electrode current collector and a positive-electrode membrane disposed on at least one surface of the positive-electrode current collector. The positive-electrode membrane usually includes a positive-electrode active material and an optional positive-electrode binder and conductive agent.

In some embodiments, the positive-electrode current collector may be a metal foil or a porous metal plate, for example, a foil or a porous plate made of metal such as aluminum, copper, nickel, titanium, or silver, or an alloy thereof. In an example, the positive-electrode current collector may be an aluminum foil.

In some embodiments, the positive-electrode active material may be selected from lithium cobalt oxide, lithium nickel oxide, lithium manganese oxide, lithium nickel manganese oxide, lithium nickel cobalt manganese oxide, lithium nickel cobalt aluminum oxide, olivine-structured lithium-containing phosphate, or the like, for example, lithium cobaltate or lithium manganate. However, this application is not limited to these materials, and other conventional known materials that can be used as positive-electrode active materials may also be used.

In some embodiments, the positive-electrode binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride (PVDF), polyethylene, polypropylene, styrene-butadiene rubber, acrylic (ester) styrene-butadiene rubber, epoxy resin, and nylon.

In some embodiments, the conductive agent includes at least one of conductive graphite, superconducting carbon, acetylene black, carbon black, Ketjen black, carbon dot, carbon nanotube, graphene, and carbon nanofiber.

The positive electrode plate may be prepared according to a method known to persons skilled in the art. In some embodiments, during preparation of a positive electrode slurry, the positive-electrode active material and the optional binder and conductive agent are usually dissolved in a solvent, to form a uniform positive electrode slurry, the positive electrode slurry is applied onto the positive-electrode current collector, and processes such as drying and cold pressing are performed to obtain the positive electrode plate. The solvent is a solvent known in the art that can be used as a positive-electrode active material layer. For example, the solvent is, without limitation to N-methylpyrrolidone (NMP).

[Separator]

The separator includes polyethylene, polypropylene, polyvinylidene fluoride, or a multilayer composite film thereof. The separator is disposed between the positive electrode plate and the negative electrode plate, mainly to prevent short circuit of the positive and negative electrodes and to allow lithium ions to pass through.

In some embodiments, the separator is a single-layer separator or a multilayer separator.

In some embodiments, a coating is applied onto the separator. In some embodiments, the coating includes at least one of an organic coating and an inorganic coating. The organic coating is selected from at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, polymethyl acrylate, polyethyl acrylate, acrylate-styrene copolymer, polydime thylsiloxane, sodium polyacrylate, and sodium carboxymethyl cellulose. The inorganic coating is selected from at least one of $SiO_2$, $Al_2O_3$, CaO, $TiO_2$, $ZnO_2$, MgO, $ZrO_2$, and $SnO_2$.

A shape and a thickness of the separator are not particularly limited in this application. For example, the separator may have a porous structure. A preparation method for the separator may be a method well known in the art that can be used for preparing separators of electrochemical apparatuses.

[Housing]

The housing is configured to package an electrode assembly. In some embodiments, the housing may be a hard shell, for example, a hard plastic shell, an aluminum shell, or a steel shell; or may be a soft package, for example, a soft bag. A material of the soft package may be plastic, for example, at least one of polypropylene (PP), polybutylene terephthalate (PBT), and polybutylene succinate (PBS).

In some embodiments, the positive electrode plate, the negative electrode plate, and the separator may be wound or laminated to form an electrode assembly, the electrode assembly is placed in the housing, and the electrolyte is injected into the housing, followed by processes such as vacuum packaging, standing, formation, shaping, and capacity grading, to obtain an electrochemical apparatus.

[Electronic apparatus]

The electronic apparatus in this application may be any electrochemical apparatus, including but not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor. It should be noted that, in addition to the foregoing electronic apparatuses, the electrochemical apparatus in this application is also applicable to energy storage power stations, sea transport vehicles, and air transport vehicles. The air transport vehicles include air transport vehicles in the atmosphere and air transport vehicles beyond the atmosphere.

In some embodiments, the electronic apparatus includes the foregoing electrochemical apparatus in this application.

[Test]

Some specific examples and comparative examples are listed below to better illustrate this application. In the following examples, all reagents, materials, and instruments used are commercially available, unless otherwise specified.

In the examples and comparative examples of this application, lithium-ion batteries are used as examples, and are prepared according to the following method.

(1) Preparation of positive electrode plate

Positive-electrode active materials lithium cobalt (with a molecular formula of $LiCoO_2$), polyvinylidene fluoride (PVDF), and conductive carbon black (Super-P) were dissolved in N-methylpyrrolidone (NMP) at a mass ratio of 96:2:2 and were mixed to obtain a uniform positive electrode slurry. The positive electrode slurry was evenly applied onto a positive-electrode current collector aluminum foil with a thickness of 12 $\mu$m and dried at 120°C for 1 h, followed by compaction and slitting, to obtain a positive electrode plate.

(2) Preparation of negative electrode plate

A negative electrode active material, sodium carboxymethyl cellulose (CMC), and styrene-butadiene rubber were dissolved in deionized water at a mass ratio of 85:2:13 and were mixed thoroughly to obtain a negative electrode slurry. The negative electrode slurry was evenly applied onto a negative electrode current collector copper foil with a thickness of 12 $\mu$m and dried at 120°C for 1 h to obtain a negative electrode membrane, followed by compaction and slitting, to obtain a negative electrode plate. The negative electrode active material was a mixed material of a silicon-based active material and graphite. The silicon-based active material accounted for 15% of the negative electrode active material.

(3) Preparation of separator

A polypropylene film with a thickness of 12 $\mu$m was used as a separator.

(4) Preparation of electrolyte

Ethylene carbonate and diethyl carbonate were mixed at a mass ratio of 3:7 to obtain a uniform basic solvent. Dry lithium hexafluorophosphate ($LiPF_6$) was added to the basic solvent and mixed to obtain a uniform electrolyte. A mass percentage of $LiPF_6$ was 12.5%. A specified amount of the additive in this application may be added to the electrolyte to obtain an additive-containing electrolyte.

(5) Preparation of lithium-ion battery

The positive electrode plate, the separator, and the negative plate electrode were stacked in order, so that the separator was sandwiched between the positive and negative electrodes for separation, and were then wound into a prismatic bare cell. The bare cell was put into an aluminum-plastic packaging bag and dried at 80°C to obtain a dry cell. Then a corresponding electrolyte was injected, followed by processes such as vacuum packaging, standing, formation, and shaping, to complete preparation of a lithium-ion battery.

Lithium-ion batteries of the examples and comparative examples of this application were prepared according to the foregoing method, and battery performance was tested. Types and proportions of substances or additives used in the examples and comparative examples, and performance test results of the lithium-ion batteries are shown in Table 1 to Table 4. The proportion of each additive is a mass percentage calculated based on the mass of the electrolyte.

Measurement of the number of silicon-based active particles accommodated in a square region of 200 $\mu$m$^2$ on a cross section of a negative electrode active material layer:

A cold-pressed negative electrode plate was cut into samples with a size of 6 mm × 6 mm. A sample stage was put on a heater for heating at a heating temperature of 150°C to 160°C. Then paraffin wax was applied onto the sample stage. After the paraffin wax was melted, a negative electrode plate sample was put on the sample stage, with the sample slightly extending from an edge of the sample stage. Then the sample was cut along a thickness direction by using an ion polisher. Then a cross section obtained through cutting was observed using a scanning electron microscope (SEM). In addition, an X-ray energy dispersive spectroscopy (EDS) was used to detect for element Si so as to mark silicon-based active particles. A square region with an area of 200 $\mu$m$^2$ was selected at any location on the obtained cross section, and the number of silicon-based active particles falling within the square region (a particle was counted once any part of the particle fell within the square region) was observed, to obtain the of silicon-based active particles accommodated in the square region with an area of 200 $\mu$m$^2$.

Then performance of the lithium-ion batteries was tested.

(1) High-temperature cycling performance test

At 45°C, the battery was charged to 4.45 V at a constant current of 0.5C, left standing for 30 min, and then discharged to 3.0 V at 0.5C. The battery was subjected to 300 charge and discharge cycles.

$$\text{Cycling capacity retention rate } (\%) = \text{discharge capacity after } 300$$

$$\text{cycles/discharge capacity at the first cycle} \times 100\%$$

(2) Room-temperature cycling performance test

At 25°C, the battery was charged to 4.45 V at a constant current of 0.5C, left standing for 30 min, and then discharged to 3.0 V at 0.5C. The battery was subjected to 300 charge and discharge cycles.

$$\text{Cycling capacity retention rate } (\%) = \text{discharge capacity after 300 cycles/discharge capacity at the first cycle} \times 100\%$$

(3) Compacted density of negative electrode plate

Compacted density of a negative electrode plate = mass of a negative electrode active layer per unit area $(g/cm^2)$/thickness of a negative electrode active material layer (cm). The mass of the negative electrode active layer per unit area may be weighed using a standard balance, and the thickness of the negative electrode active material layer may be measured using a ten-thousandth micrometer.

Electrical performance test data is shown below.

In examples of Table 1, $LiCoO_2$ is used as a positive-electrode active material, the negative electrode active material includes a mixture of a silicon-based active material and graphite, compacted density of the negative electrode plate is 1.2 $g/cm^3$, and all metal salts added in Table 1 are bistrifluorosulfonimide metal salts.

**Table 1 Parameters of Example 1-1 to Example 1-14 and Comparative Example 1-1 to Comparative Example 1-4**

| Item | Mass percentage of the silicon-based active material X | Metal ion | Mass proportion A of metal ions (ppm) | X/A | Cycling capacity retention rate at 45°C (%) | Cycling capacity retention rate at 25°C (%) |
|---|---|---|---|---|---|---|
| Example 1-1 | 15 | Magnesium | 10 | 1.5 | 50 | 54 |
| Example 1-2 | 15 | Magnesium | 100 | 0.15 | 53 | 55 |

| Item | Mass percentage of the silicon-based active material X | Metal ion | Mass proportion A of metal ions (ppm) | X/A | Cycling capacity retention rate at 45°C (%) | Cycling capacity retention rate at 25°C (%) |
|---|---|---|---|---|---|---|
| Example 1-3 | 15 | Magnesium | 500 | 0.03 | 56 | 59 |
| Example 1-4 | 15 | Magnesium | 1000 | 0.015 | 60 | 65 |
| Example 1-5 | 15 | Magnesium | 5000 | 0.003 | 67 | 69 |
| Example 1-6 | 15 | Magnesium | 8000 | 0.00187 | 52 | 56 |
| Example 1-7 | 20 | Magnesium | 10 | 2 | 49 | 52 |
| Example 1-8 | 40 | Magnesium | 10 | 4 | 46 | 48 |
| Example 1-9 | 80 | Magnesium | 10 | 8 | 45 | 46 |
| Example 1-10 | 15 | Calcium | 100 | 0.15 | 55 | 57 |
| Example 1-11 | 15 | Molybdenum | 100 | 0.15 | 56 | 58 |
| Example 1-12 | 15 | Aluminum | 100 | 0.15 | 58 | 60 |
| Example 1-13 | 15 | Cesium | 100 | 0.15 | 57 | 59 |
| Example 1-14 | 15 | Zinc + magnesium | 50 + 50 | 0.15 | 61 | 63 |
| Comparative Example 1-1 | 15 | Magnesium | 5 | 3 | 41 | 43 |
| Comparative Example 1-2 | 15 | Magnesium | 8500 | 0.00176 | 40 | 42 |
| Comparative Example 1-3 | 100 | Magnesium | 10 | 10 | 40 | 43 |
| Comparative Example 1-4 | 15 | / | / | / | 38 | 40 |

It can be learned from the data in Table 1 that, when the mass proportion A ppm of magnesium ions in the electrolyte and the mass percentage X% of the silicon-based active material to the negative electrode active material are adjusted to satisfy the relational expression: $0 < X/A \leq 8$, or further, $0.001 \leq X/A \leq 4$, cycling performance of the lithium-ion battery can be effectively improved. When the mass proportion A ppm of the metal ions satisfies $10 \leq A \leq 8000$, the electrochemical apparatus has better cycling performance.

In examples of Table 2, $LiCoO_2$ is used as the positive-electrode active material in Example 2-1 to Example 2-11, the negative electrode active material includes a mixture of a silicon-based active material and graphite, the compacted density of the negative electrode plate is 1.2 g/cm$^3$, the proportion of magnesium ions in the electrolyte is 1000 ppm, and the silicon-based active material accounts for 15% of the negative electrode active material.

**Table 2 Parameters of Example 2-1 to Example 2-11 and Example 1-4**

| Item | Anion | Proportion B of anions (ppm) | Cycling capacity retention rate at 45°C (%) | Cycling capacity retention rate at 25°C (%) |
|---|---|---|---|---|
| Example 2-1 | $NO_3^{2-}$ | 3 | 60 | 65 |
| Example 2-2 | $NO_3^{2-}$ | 5 | 65 | 70 |
| Example 2-3 | $NO_3^{2-}$ | 7 | 67 | 71 |
| Example 2-4 | $NO_3^{2-}$ | 10 | 67 | 72 |
| Example 2-5 | $NO_3^{2-}$ | 500 | 70 | 73 |
| Example 2-6 | $NO_3^{2-}$ | 2000 | 73 | 74 |
| Example 2-7 | $NO_3^{2-}$ | 5000 | 71 | 73 |
| Example 2-8 | $NO_3^{2-}$ | 10000 | 70 | 71 |
| Example 2-9 | $SO_4^{2-}$ | 100 | 69 | 72 |
| Example 2-10 | $NO_3^{2-}$ + $SO_4^{2-}$ | 50 + 100 | 72 | 73 |
| Example 2-11 | $NO_3^{2-}$ + $SO_4^{2-}$ + $SO_3^{2-}$ | 100 + 100 + 100 | 71 | 75 |
| Example 1-4 | / | / | 60 | 65 |

It can be learned from Table 2 that cycling performance of the electrochemical apparatus can be further improved by adding anions of different proportions and types on the basis of Example 1-4. This is because the anion group can participate in formation of the low-impedance SEI film on the negative electrode interface, which facilitates faster migration of lithium ions, thereby improving cycling performance of the electrochemical apparatus. When the mass proportion B ppm of the anion satisfies $5 \leq B \leq 10000$, the electrochemical apparatus has better cycling performance.

In examples of Table 3, $LiCoO_2$ is used as the positive-electrode active material in Example 3-1 to Example 3-8, the negative electrode active material includes a mixture of a silicon-based active material and graphite, the compacted density of the negative electrode plate is 1.2 g/cm$^3$, the proportion of magnesium ions in the electrolyte is 1000 ppm, the proportion of $NO_3^{2-}$ is 500 ppm, and the silicon-based active material accounts for 15% of the negative electrode active material.

**Table 3 Parameters of Example 3-1 to Example 3-8 and Example 2-5**

| Item | Additive | Percentage C of additive (%) | Cycling capacity retention rate at 45°C (%) | Cycling capacity retention rate at 25°C (%) |
|---|---|---|---|---|
| Example 3-1 | Fluoroethylene carbonate | 5 | 75 | 80 |
| Example 3-2 | Fluoroethylene carbonate | 20 | 79 | 82 |

(continued)

| Item | Additive | Percentage C of additive (%) | Cycling capacity retention rate at 45°C (%) | Cycling capacity retention rate at 25°C (%) |
|---|---|---|---|---|
| Example 3-3 | Fluoroethylene carbonate | 30 | 76 | 79 |
| Example 3-4 | Fluoroethylene carbonate | 40 | 71 | 74 |
| Example 3-5 | Vinylidene carbonate | 0.5 | 73 | 77 |
| Example 3-6 | Butanedinitrile | 1 | 75 | 80 |
| Example 3-7 | Adiponitrile | 1 | 75 | 80 |
| Example 3-8 | Adiponitrile + fluoroethylene carbonate | 1 + 5 | 77 | 82 |
| Example 2-5 | / | / | 70 | 73 |

It can be learned from Table 3 that cycling performance of the electrochemical apparatus can be further improved by adding additives of different types and percentages on the basis of Example 2-5. When the mass percentage C% of the additive satisfies $0.5 \leq C \leq 40$, the electrochemical apparatus has better cycling performance.

In Table 4, $LiCoO_2$ is used as the positive-electrode active material in Example 4-1 to Example 4-4, the negative electrode active material is a mixture of a silicon-based active material and graphite, the proportion of magnesium ions in the electrolyte is 1000 ppm, and the proportion of $NO_3^{2-}$ is 500 ppm.

**Table 4 Parameters of Example 3-7 and Example 4-1 to Example 4-8**

| Item | Number N of silicon-based active particles | Compacted density M of negative electrode plate (g/cm$^3$) | Cycling capacity retention rate at 45°C (%) | Cycling capacity retention rate at 25°C (%) |
|---|---|---|---|---|
| Example 4-1 | 26 | 1 | 74 | 78 |
| Example 4-2 | 23 | 1.5 | 80 | 85 |
| Example 4-3 | 21 | 2 | 77 | 83 |
| Example 4-4 | 20 | 2.5 | 73 | 76 |
| Example 4-5 | 1 | 1.3 | 82 | 86 |
| Example 4-6 | 12 | 1.3 | 84 | 87 |
| Example 4-7 | 38 | 1.3 | 69 | 71 |
| Example 4-8 | 50 | 1.3 | 69 | 70 |
| Example 3-7 | 24 | 1.2 | 75 | 80 |

It can be learned from Table 4 that, on the basis of Example 3-7, when $1 \leq N \leq 50$, cycling performance of the electrochemical apparatus can be further improved. When the compacted density M g/cm$^3$ of the negative electrode plate satisfies $1 \leq M \leq 2.5$, the electrochemical apparatus has better cycling performance.

The foregoing disclosed features are not intended to limit the implementation scope of this disclosure. Therefore, equivalent variations made based on the content of the claims of this disclosure shall be included in the scope of the claims of this disclosure.

**Claims**

1. An electrochemical apparatus, comprising a negative electrode plate and an electrolyte; wherein,

   the negative electrode plate comprises a negative electrode current collector and a negative electrode active material layer disposed on the negative electrode current collector;
   the negative electrode active material layer comprises a negative electrode active material,
   the negative electrode active material contains a silicon-based active material, and a mass percentage of the silicon-based active material based on a mass of the negative electrode active material is X%;
   the electrolyte contains metal ions, wherein based on a mass of the electrolyte, a mass proportion of the metal ions is A ppm; and $0 < X/A \leq 8$.

2. The electrochemical apparatus according to claim 1, wherein
   the metal ions comprise at least one of magnesium ions, aluminum ions, zinc ions, calcium ions, titanium ions, cesium ions, or molybdenum ions.

3. The electrochemical apparatus according to any one of claims 1 to 2, wherein
   $10 \leq A \leq 8000$.

4. The electrochemical apparatus according to any one of claims 1 to 3, wherein
   the electrolyte further contains at least one of anions $NO_3^{2-}$, $SO_4^{2-}$, $SO_3^{2-}$, $CO_3^{2-}$, or $SiO_3^{2-}$.

5. The electrochemical apparatus according to claim 4, wherein
   based on the mass of the electrolyte, a mass proportion of the anions is B ppm, wherein $5 \leq B \leq 10000$.

6. The electrochemical apparatus according to any one of claims 1 to 5, wherein at least one of the following conditions is satisfied:

   (1) $0.001 \leq X/A \leq 4$;
   (2) $100 \leq A \leq 5000$.

7. The electrochemical apparatus according to any one of claims 5 to 6, wherein
   based on the mass of the electrolyte, a mass proportion of the anions is B ppm, wherein $100 \leq B \leq 10000$.

8. The electrochemical apparatus according to any one of claims 1 to 7, wherein

   the electrolyte further contains fluoroethylene carbonate; and
   based on the mass of the electrolyte, a mass percentage of the fluoroethylene carbonate is 0.5% to 40%.

9. The electrochemical apparatus according to any one of claims 1 to 8, wherein

   the electrolyte further contains vinylene carbonate; and
   based on the mass of the electrolyte, a mass percentage of the vinylene carbonate is 0.5% to 3%.

10. The electrochemical apparatus according to any one of claims 1 to 9, wherein
    the electrolyte further contains 1,3-propanesultone; and
    based on the mass of the electrolyte, a mass percentage of the 1,3-propanesultone is 0.5% to 3%.

11. The electrochemical apparatus according to any one of claims 1 to 10, wherein the electrolyte further contains an additive, the additive comprises at least one of succinonitrile, adiponitrile, or 1,3,6-hexanetricarbonitrile; and

based on the mass of the electrolyte, a mass percentage of the additive is 0.5% to 3%.

12. The electrochemical apparatus according to any one of claims 1 to 11, wherein the negative electrode active material contains silicon-based active particles; and

a cross section of the negative electrode active material layer comprises a square region with an area of 200 $\mu m^2$, wherein the number of silicon-based active particles accommodated in the square region is N, $1 \leq N \leq 50$, and the cross section of the negative electrode active material layer is parallel to a thickness direction of the negative electrode active material layer.

13. The electrochemical apparatus according to any one of claims 1 to 12, wherein
a compacted density of the negative electrode plate is M g/cm$^3$, wherein $1 \leq M \leq 2.5$.

14. An electronic apparatus, comprising the electrochemical apparatus according to any one of claims 1 to 13.

Europäisches
Patentamt

European
Patent Office

Office européen
des brevets

## EUROPEAN SEARCH REPORT

Application Number

**EP 23 16 1992**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/081357 A1 (ZHU YE [US] ET AL) 14 March 2019 (2019-03-14) | 1-7, 12-14 | INV. H01M4/13 |
| Y | * paragraphs [0038], [0039]; table 1 * | 8-11 | H01M4/36 H01M4/62 |
| Y | JP 2013 191439 A (PANASONIC CORP) 26 September 2013 (2013-09-26) * paragraph [0104] * | 8-11 | H01M10/0525 H01M10/0567 H01M10/0569 |
| A | WO 2021/192575 A1 (PANASONIC IP MAN CO LTD [JP]) 30 September 2021 (2021-09-30) * the whole document * | 1-14 | ADD. H01M4/02 |

TECHNICAL FIELDS
SEARCHED        (IPC)

H01M

The present search report has been drawn up for all claims

| Place of search | Date of completion of the search | Examiner |
|---|---|---|
| Munich | 21 August 2023 | Meini, Stefano |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 16 1992

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2023

| Patent document cited in search report | | Publication date | Patent family member(s) | | Publication date |
|---|---|---|---|---|---|
| US 2019081357 | A1 | 14-03-2019 | CN | 109804495 A | 24-05-2019 |
| | | | US | 2018062201 A1 | 01-03-2018 |
| | | | US | 2019081357 A1 | 14-03-2019 |
| | | | WO | 2018044879 A1 | 08-03-2018 |
| JP 2013191439 | A | 26-09-2013 | JP | 5995161 B2 | 21-09-2016 |
| | | | JP | 2013191439 A | 26-09-2013 |
| WO 2021192575 | A1 | 30-09-2021 | CN | 115398679 A | 25-11-2022 |
| | | | EP | 4131463 A1 | 08-02-2023 |
| | | | JP | WO2021192575 A1 | 30-09-2021 |
| | | | US | 2023109890 A1 | 13-04-2023 |
| | | | WO | 2021192575 A1 | 30-09-2021 |

EPO FORM P0459

For more details about this annex : see Official Journal of the European Patent Office, No. 12/82